# EUROPEAN PATENT APPLICATION

(11) **EP 3 185 562 A1**
(43) Date of publication of application: **28.06.2017**
(21) Application number: 16750597.3
(22) Date of filing: 03.06.2016
(51) Int. Cl.: H04N 21/218, H04N 21/2187, H04N 21/258, H04N 21/854

(54) **METHOD AND APPARATUS FOR PROCESSING PANORAMIC LIVE VIDEO RESOURCE**

(30) Priority: 09.11.2015 CN 201510757780
(71) Applicant: LE Holdings (Beijing) Co., Ltd., Beijing 100025 (CN); Le Shi Zhi Xin Electronic Technology (Tianjin) Limited, Tianjin 300467 (CN)
(72) Inventor: TIAN, Xianxiong, Eco-city, Binhai New Area Tianjin 300467 (CN); WANG, Libiao, Eco-city, Binhai New Area Tianjin 300467 (CN); WANG, Qian, Eco-city, Binhai New Area Tianjin 300467 (CN); LI, Juan, Eco-city, Binhai New Area Tianjin 300467 (CN)
(74) Representative: Loock, Jan Pieter
(86) International application number: PCT/CN2016/084668
(87) International publication number: WO 2017/080199

(57) **Abstract**

The present disclosure provides a method and apparatus for processing panoramic live broadcast video resources. The method includes: obtaining the panoramic live broadcast video resources, wherein the panoramic live broadcast video resources are suitable for a wearable virtual reality device; obtaining first detail information of the panoramic live broadcast video resources, and editing the first detail information to obtain first description data for illustrating the panoramic live broadcast video resources; and sending the panoramic live broadcast video resources and the first description data to a client corresponding to the wearable virtual reality device. By adopting the present disclosure, a user can obtain more real-time live videos, all-directional full-view dome type viewing experience is brought to the user, and the viewed programs are not limited by the geographic position, so the user experience of the virtual reality is greatly improved.

## Description

### CROSS-REFERENCE TO RELATED APPLICATIONS

The present disclosure is applied to the Chinese Application No. 201510757780.9, filed on November 09, 2015, and entitled "METHOD AND APPARATUS FOR PROCESSING PANORAMIC LIVE BROADCAST VIDEO RESOURCES".

### FIELD OF TECHNOLOGY

The present disclosure relates to video play technology, and in particular, to a method and apparatus for processing panoramic live broadcast video resources.

### BACKGROUND

A virtual reality (VR) technology is a computer emulation system that can create and experience the virtual world, it employs a computer to generate a simulation environment, the simulation environment is system emulation of interactive 3D dynamic views and entity behaviors which fuse multi-source information, and thus a user can be immersed in the environment.

An existing virtual reality helmet employs the virtual reality technology, and a helmet display seals the vision and the auditory sense of the user to the outside to guide the user to generate a feeling of being in the virtual environment. The display principle is that left and right eye screens respectively display left and right eye images, and after the human eyes obtain the information with difference, a stereoscopic effect is generated in the brain. As a display device of the virtual reality, the helmet display is smart and strong in sealing property, and is widely used in military training, virtual driving, virtual city and other projects.

However, in the process of implementing the present disclosure, the inventor discovers that the prior art at least has the following problems:
the existing virtual reality helmet can provide panoramic videos and games and other contents for the user, the user connects a mobile phone to the VR helmet, but can only play the contents in the local mobile phone or app, or, a part of helmet can also store the contents in the local helmet for play. Most of the panoramic contents provided by the VR helmet are contents on the local or app, while the local or app has few panoramic live broadcast contents, resulting in that the user can view very few panoramic live broadcast contents, and thus the viewing experience of the user cannot be satisfied.

### SUMMARY

The present disclosure provides a method and apparatus for processing panoramic live broadcast video resources, in order to solve the problem in the prior art that the local or app has few panoramic live broadcast contents, resulting in that a user can view very few panoramic live broadcast contents, and thus the viewing experience of the user cannot be satisfied.

According to one aspect of the present disclosure, a method for processing panoramic live broadcast video resources is provided, including:
obtaining the panoramic live broadcast video resources, wherein the panoramic live broadcast video resources are suitable for a wearable virtual reality device;
obtaining first detail information of the panoramic live broadcast video resources, and editing the first detail information to obtain first description data for illustrating the panoramic live broadcast video resources; and
sending the panoramic live broadcast video resources and the first description data to a client corresponding to the wearable virtual reality device.

According to another aspect of the present disclosure, an apparatus for processing panoramic live broadcast video resources is provided, including:
a first obtaining module, used for obtaining the panoramic live broadcast video resources, wherein the panoramic live broadcast video resources are suitable for a wearable virtual reality device;
a second obtaining module, used for obtaining first detail information of the panoramic live broadcast video resources;
an editing module, used for editing the first detail information to obtain first description data for illustrating the panoramic live broadcast video resources; and
a sending module, used for sending the panoramic live broadcast video resources and the first description data to a client corresponding to the wearable virtual reality device.

According to a third aspect of the present disclosure, an apparatus for processing panoramic live broadcast video resources is provided, including:
a processor, a memory, a communication interface and a bus; wherein,
the processor, the memory and the communication interface communicate with each other by the bus;
the communication interface is used for completing the information transmission of the apparatus for processing panoramic live broadcast video resources and a client;
the processor is used for invoking a logic instruction in the memory to execute the following method:
obtaining the panoramic live broadcast video resources, wherein the panoramic live broadcast video resources are suitable for a wearable virtual reality device; obtaining first detail information of the panoramic live broadcast video resources, and editing the first detail information to obtain first description data for illustrating the panoramic live broadcast video resources; and sending the panoramic live broadcast video resources and the first description data to the client corresponding to the wearable virtual reality device.

According to a fourth aspect of the present disclosure, a computer program is provided, including a program code, wherein the program code is used for executing the following operations:
obtaining the panoramic live broadcast video resources, wherein the panoramic live broadcast video resources are suitable for a wearable virtual reality device;
obtaining first detail information of the panoramic live broadcast video resources, and editing the first detail information to obtain first description data for illustrating the panoramic live broadcast video resources; and
sending the panoramic live broadcast video resources and the first description data to a client corresponding to the wearable virtual reality device.

According to a fifth aspect of the present disclosure, a storage medium is provided, used for storing the above computer program.

The present disclosure has the following beneficial effects:
According to the method and apparatus for processing the panoramic live broadcast video resources provided by the present disclosure, the panoramic live broadcast video resources are processed to directly establish a connection of the wearable virtual reality device and the panoramic live broadcast video resources, so that the user can obtain more real-time live videos, all-directional full-view dome type viewing experience is brought to the user, and the viewed programs are not limited by the geographic position, so the user experience of the virtual reality is greatly improved.

### BRIEF DESCRIPTION OF THE DRAWINGS

Fig. 1 is a flowchart of a method for processing panoramic live broadcast video resources provided by one embodiment of the present disclosure;
Fig. 2 is a flowchart of a method for processing panoramic live broadcast video resources provided by another embodiment of the present disclosure;
Fig. 3 is a structural block diagram of an apparatus for processing panoramic live broadcast video resources provided by one embodiment of the present disclosure;
Fig.4 is a schematic diagram of a solid structure of an apparatus for processing panoramic live broadcast video resources provided by the present disclosure.

### DETAILED DESCRIPTION OF THE EMBODIMENTS

Embodiments of the present disclosure will be described in detail below, and examples of the embodiments are shown in the accompanying drawings throughout which identical or similar marks express identical or similar elements or elements with identical or similar functions. The embodiments described below with reference to the accompanying drawings are exemplary, merely used for explaining the present disclosure, and cannot to be construed as limiting the present disclosure.

Those skilled in the art can understand that, unless specifically stated, the singular forms "a", "an", "the" and "said" can also include plural forms. It should be further understood that the word "including" used in the description of the present disclosure means the presence of the features, integers, steps, operations, elements, and/or assemblies, but does not exclude the presence or addition of one or more other features, integers, steps, operations, elements, assemblies, and/or groups thereof.

Those skilled in the art can understand that, unless otherwise defined, all terms (including technical terms and scientific terms) used herein have the same meaning as the general understanding of those of ordinary skill in the art to which the present disclosure belongs. It should also be understood that, those terms defined in a universal dictionary, as an example, should be understood as having the same meanings as those in the context of the prior art, and unless otherwise defined, will not be explained by ideal or too formal meanings.

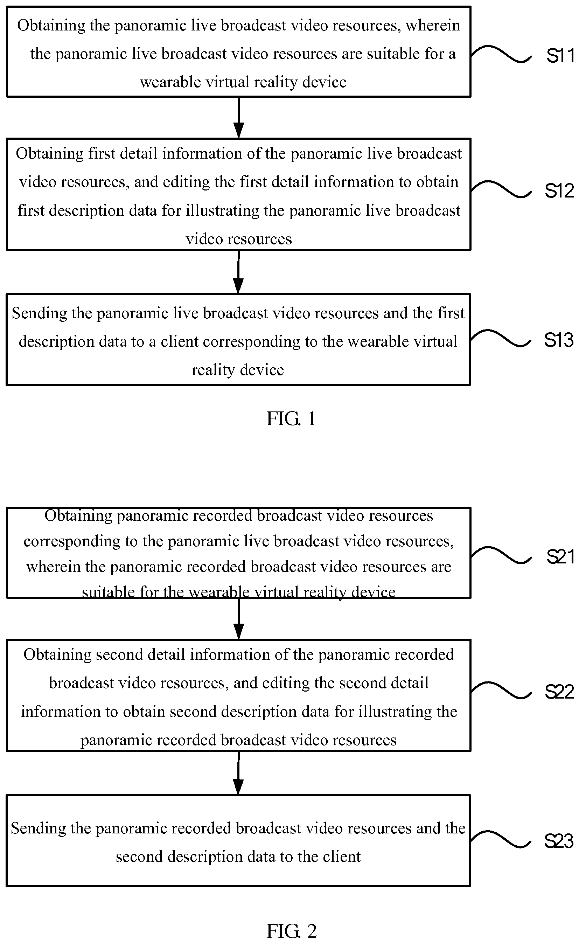

Fig. 1 shows a flowchart of a method for processing panoramic live broadcast video resources provided by one embodiment of the present disclosure.

Refer to Fig. 1, the method for processing the panoramic live broadcast video resources provided by the embodiment of the present disclosure specifically includes the following steps:
S11, the panoramic live broadcast video resources are obtained, wherein the panoramic live broadcast video resources are suitable for a wearable virtual reality device;
S12, first detail information of the panoramic live broadcast video resources is obtained, and the first detail information is edited to obtain first description data for illustrating the panoramic live broadcast video resources; and
wherein, the first detail information of the panoramic live broadcast video resources includes: title names, descriptions and pictures or the like. The first description data for illustrating the panoramic live broadcast video resources include: titles, pictures, states, sources, categories, expected play durations and descriptions or the like of the panoramic live broadcast video resources.

S13, the panoramic live broadcast video resources and the first description data are sent to a client corresponding to the wearable virtual reality device.

In the embodiment of the present disclosure, a server obtains the panoramic live broadcast video resources from a LeTV live broadcast hall and edits the obtained detail information for illustrating the panoramic live broadcast video resources to obtain the description data for illustrating the panoramic live broadcast video resources, the panoramic live broadcast video resources and the description data for the panoramic live broadcast video resources are sent to the client app corresponding to the wearable virtual reality device, so a user can display the contents in the wearable virtual reality device through the client app to realize the immersive experience of panoramic live broadcast, and thus the user experience of the virtual reality is greatly improved.

The method for processing the panoramic live broadcast video resources provided by the embodiment of the present disclosure is used for solving the problem in the prior art that the local or app has few panoramic live broadcast contents, resulting in that the user can view very few panoramic live broadcast contents, and thus the viewing experience of the user cannot be satisfied. The user can view more real-time live videos, and all-directional full-view dome type viewing experience is brought to the user.

It should be noted that, the wearable virtual reality device is an intelligent device having a virtual reality function, such as a VR helmet and VR glasses or the like, and this is not specifically limited in the present disclosure.

In another embodiment of the present disclosure, after the live broadcast of the panoramic live broadcast video resources is terminated, the method further includes the following steps:
S21, panoramic recorded broadcast video resources corresponding to the panoramic live broadcast video resources are obtained, wherein the panoramic recorded broadcast video resources are suitable for the wearable virtual reality device;
S22, second detail information of the panoramic recorded broadcast video resources is obtained, and the second detail information is edited to obtain second description data for illustrating the panoramic recorded broadcast video resources; and
S23, the panoramic recorded broadcast video resources and the second description data to are sent the client.

In the embodiment of the present disclosure, after the live broadcast, the server obtains the panoramic recorded broadcast video resources from a LeTV media asset library, as an example, and edits the obtained detail information for illustrating the panoramic recorded broadcast video resources to obtain the description data for illustrating the panoramic recorded broadcast video resources, and the panoramic recorded broadcast video resources and the description data for the panoramic recorded broadcast video resources are sent to the client app corresponding to the wearable virtual reality device, so that the user can view panoramic recorded broadcast contents through the client app.

Further, the method further includes:
a user request message sent by the client is received, wherein the user request message carries a user ID; and
the operation authority of the user is determined according to the user ID.

In the embodiment of the present disclosure, when the wearable virtual reality device of the user connects the panoramic live broadcast contents of the client app through the corresponding client app thereof, the user needs to register and log in the client app, the client generates request information according to a trigger event of the user and sends the request information to the server, and the server determines the operation authority of the user according to the user ID carried in the user request message.

In practical application, for users with different operation authorities, the video resources capable of being viewed by them are different, for example, paying member users can view all the panoramic live broadcast contents connected with the client app, but common non-member users can only connect a small amount of panoramic live broadcast contents of preset categories, or cannot connect a small amount of panoramic live broadcast contents of preset categories.

Specifically, in the step S13, the panoramic live broadcast video resources and the first description data are sent to the client corresponding to the wearable virtual reality device, specifically including:
the panoramic live broadcast video resources conforming to the operation authority among all the obtained panoramic live broadcast video resources and the corresponding first description data are sent to the client;
and/or,
in the step S23, the panoramic recorded broadcast video resources and the second description data are sent to the client, specifically including:
the panoramic recorded broadcast video resources conforming to the operation authority among all the obtained panoramic recorded broadcast video resources and the corresponding second description data are sent to the client.

Further, the method for processing the panoramic live broadcast video resources provided by the embodiment of the present disclosure further includes:
comment information related to any panoramic live broadcast video resource and uploaded by the user is generated into shared information;
the shared information is sent to the clients of other users who are playing the panoramic live broadcast video resource at present;
or,
the comment information related to any panoramic recorded broadcast video resource and uploaded by the user is generated into the shared information; and
the shared information is sent to the clients of other users who are playing the panoramic recorded broadcast video resource at present.

In the embodiment of the present disclosure, the server establishes an information sharing function among other users who are playing the same panoramic recorded broadcast video resource or panoramic recorded broadcast video resource at present according to the user demand, generates the comment information related to any panoramic live broadcast video resource and uploaded by the user into the shared information, and sends the shared information to the clients of other users who are playing the panoramic live broadcast video resource at present, or generates the comment information related to any panoramic recorded broadcast video resource and uploaded by the user into the shared information, and sends the shared information to the clients of other users who are playing the panoramic recorded broadcast video resource at present, so as to achieve interaction.

In the embodiment of the present disclosure, before the panoramic live broadcast video resources and the first description data are sent to the client corresponding to the wearable virtual reality device, the method further includes:
the panoramic live broadcast video resources are filtered according to the hardware requirements of an intelligent device to which the client belongs, in order to send the panoramic live broadcast video resources conforming to the hardware requirements among all the panoramic live broadcast video resources and the corresponding first description data to the client; and
further, before the panoramic recorded broadcast video resources and the second description data are sent to the client, the method further includes:
the panoramic recorded broadcast video resources are filtered according to the hardware requirements of the intelligent device to which the client belongs, in order to send the panoramic recorded broadcast video resources conforming to the hardware requirements among all the panoramic recorded broadcast video resources and the corresponding second description data to the client.

In practical application, after obtaining the panoramic live broadcast video streams and/or panoramic recorded broadcast videos distributed by the cloud, the server filters out the video resources suitable for a user equipment resolution and a network bandwidth according to the hardware requirements of the intelligent device to which the client belongs, for example, the user equipment resolution and the network bandwidth and the like, and sends the filtered-out video resources satisfying the requirements to the corresponding client.

In the embodiment of the present disclosure, after the first detail information of the panoramic live broadcast video resources is obtained and the first detail information is edited, the method further includes:
real-time detail information of the panoramic live broadcast video resources is obtained, and the real-time detail information is edited to update the first description data for illustrating the panoramic live broadcast video resources;
and/or,
after the second detail information of the panoramic recorded broadcast video resources is obtained and the second detail information is edited, the method further includes:
real-time detail information of the panoramic recorded broadcast video resources is obtained, and the real-time detail information is edited to update the second description data for illustrating the panoramic recorded broadcast video resources.

In practical application, the obtaining and optimization of the panoramic live broadcast detail information are as follows:
the server obtains the detail information of the panoramic live broadcast video resources from an LeTV network live broadcast channel, as an example, edits and optimizes the detail information through an operation background and sends the detail information to the client, thereafter, the server can refresh to automatically obtain the real-time detail information of the panoramic live broadcast video resources, and re-edit the description data for illustrating the panoramic live broadcast video resources, for example, the title names, the descriptions and the pictures or the like. In addition, the server can also control the online/offline states and sequence or the like of the live broadcast resources on the client app.

The obtaining and optimization of the panoramic recorded broadcast detail information are as follows:
the server obtains the detail information of the panoramic recorded broadcast video resources from the LeTV media asset library, as an example, edits and optimizes the detail information through the operation background and sends the detail information to the client, thereafter, the server can refresh to automatically obtain the real-time detail information of the panoramic recorded broadcast video resources, and re-edit the description data for illustrating the panoramic recorded broadcast video resources, for example, the title names, the descriptions and the pictures or the like. In addition, the server can also control the online/offline states and sequence or the like of the recorded broadcast resources on the client app.

Further, the method for processing the panoramic live broadcast video resources provided by the embodiment of the present disclosure further includes:
the play addresses of the obtained panoramic live broadcast video resources and the panoramic recorded broadcast video resources corresponding to the panoramic live broadcast video resources are encrypted.

In the embodiment of the present disclosure, the server obtains the panoramic live broadcast video streams and the panoramic recorded broadcast videos corresponding to the panoramic live broadcast videos distributed by the cloud, and encrypts the play addresses to prevent the data streams from being obtained by a third party, so as to guarantee the security of the system.

Further, the method for processing the panoramic live broadcast video resources provided by the embodiment of the present disclosure further includes: a step of caching the obtained data resources to satisfy a request for high concurrent traffic. Wherein, the data resources include the panoramic live broadcast video resources and the panoramic recorded broadcast video resources.

In the embodiment, the member users with certain authorities can collect the current live broadcast video resources according to collection request information sent by the users in a real-time live video process, and the users can play the program on demand after collecting the same.

According to the method for processing the panoramic live broadcast video resources provided by the embodiment of the present disclosure, the panoramic live broadcast video resources are processed to directly establish a connection of the wearable virtual reality device and the panoramic live broadcast video resources, so that the user can obtain more real-time live videos, after the live broadcast is terminated, the corresponding panoramic recorded broadcast video resources are further provided, so all-directional full-view dome type viewing experience is brought to the user, the viewed programs are not limited by the geographic position, after logging in the member system, the user can also interact with other simultaneously viewing users, and the user can play the program on demand after collecting the same, so the user experience of the virtual reality is greatly improved.

In addition, for the purpose of simple description, the above method embodiment is described as a series of action combinations, but those skilled in the art should be aware that the present disclosure is not limited to the described action sequence, secondly, those skilled in the art should also be aware that the embodiments described in the description all belong to preferred embodiments, and the involved actions are not absolutely necessary for the present disclosure.

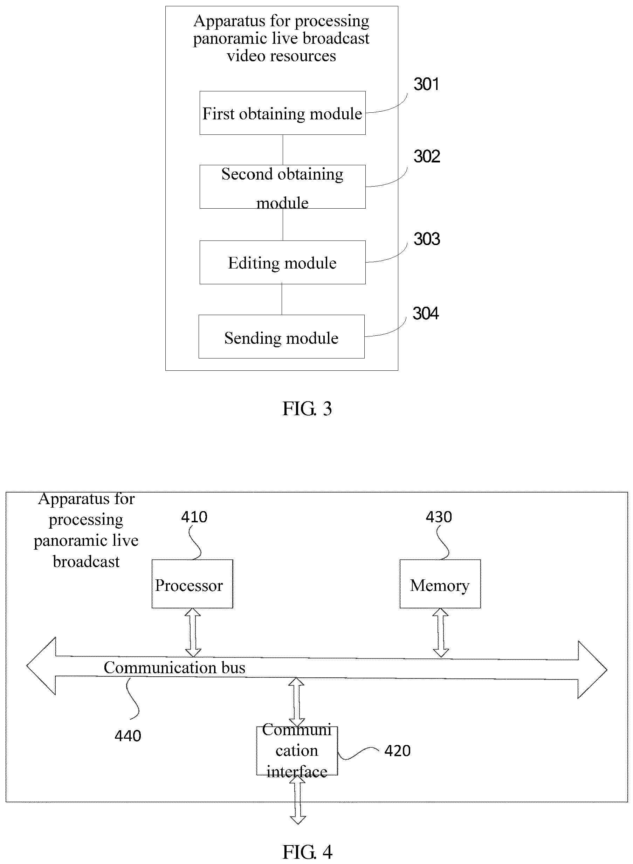

Based on the same inventive concept as the method, the embodiment of the present disclosure further provides an apparatus for processing panoramic live broadcast video resources, and Fig. 3 shows a structural block diagram of an apparatus for processing panoramic live broadcast video resources provided by one embodiment of the present disclosure.

Refer to Fig. 3, the apparatus for processing the panoramic live broadcast video resources provided by the embodiment of the present disclosure specifically includes a first obtaining module 301, a second obtaining module 302, an editing module 303 and a sending module 304, wherein:
the first obtaining module 301 is used for obtaining the panoramic live broadcast video resources, wherein the panoramic live broadcast video resources are suitable for a wearable virtual reality device;
the second obtaining module 302 is used for obtaining first detail information of the panoramic live broadcast video resources;
the editing module 303 is used for editing the first detail information to obtain first description data for illustrating the panoramic live broadcast video resources; and
the sending module 304 is used for sending the panoramic live broadcast video resources and the first description data to a client corresponding to the wearable virtual reality device.

Further, in another embodiment of the present disclosure, the first obtaining module 301 is further used for, after the live broadcast of the panoramic live broadcast video resources is terminated, obtaining panoramic recorded broadcast video resources corresponding to the panoramic live broadcast video resources, wherein the panoramic recorded broadcast video resources are suitable for the wearable virtual reality device;
the second obtaining module 302 is further used for obtaining second detail information of the panoramic recorded broadcast video resources;
the editing module 303 is further used for editing the second detail information to obtain second description data for illustrating the panoramic recorded broadcast video resources; and
the sending module 304 is further used for sending the panoramic recorded broadcast video resources and the second description data to the client.

In the embodiment of the present disclosure, the apparatus further includes a receiving module and a judging module, wherein:
the receiving module is used for receiving a user request message sent by the client, wherein the user request message carries a user ID; and
the judging module is used for determining the operation authority of the user according to the user ID.

Further, in the embodiment of the present disclosure, the sending module is specifically used for sending the panoramic live broadcast video resources conforming to the operation authority among all the obtained panoramic live broadcast video resources and the corresponding first description data to the client;
and/or,
sending the panoramic recorded broadcast video resources conforming to the operation authority among all the obtained panoramic recorded broadcast video resources and the corresponding second description data to the client.

In the embodiment of the present disclosure, the apparatus further includes a generation module:
the generation module is used for generating comment information related to any panoramic live broadcast video resource and uploaded by the user into shared information, or generating the comment information related to any panoramic recorded broadcast video resource and uploaded by the user into the shared information; and
correspondingly, the sending module 304 is further used for sending the shared information to the clients of other users who are playing the panoramic live broadcast video resource at present, or sending the shared information to the clients of other users who are playing the panoramic recorded broadcast video resource at present.

In the embodiment of the present disclosure, the apparatus further includes a filtering module:
the filtering module is used for, before the sending module 304 sends the panoramic live broadcast video resources and the first description data to the client corresponding to the wearable virtual reality device, filtering the panoramic live broadcast video resources according to the hardware requirements of an intelligent device to which the client belongs, in order to send the panoramic live broadcast video resources conforming to the hardware requirements among all the panoramic live broadcast video resources and the corresponding first description data to the client;
and/or, filtering the panoramic recorded broadcast video resources according to the hardware requirements of the intelligent device to which the client belongs, in order to send the panoramic recorded broadcast video resources conforming to the hardware requirements among all the panoramic recorded broadcast video resources and the corresponding second description data to the client.

Further, in the embodiment of the present disclosure, the second obtaining module 302 is further used for, after obtaining the first detail information of the panoramic live broadcast video resources and editing the first detail information, obtaining real-time detail information of the panoramic live broadcast video resources; and/or, after obtaining the second detail information of the panoramic recorded broadcast video resources and editing the second detail information, obtaining real-time detail information of the panoramic recorded broadcast video resources; and
correspondingly, the editing module 303 is further used for editing the real-time detail information of the panoramic live broadcast video resources to update the first description data for illustrating the panoramic live broadcast video resources; and/or, editing the real-time detail information of the panoramic recorded broadcast video resources to update the second description data for illustrating the panoramic recorded broadcast video resources.

In the embodiment of the present disclosure, the apparatus further includes:
an encryption module, used for encrypting the play addresses of the obtained panoramic live broadcast video resources and the panoramic recorded broadcast video resources corresponding to the panoramic live broadcast video resources.

Further, in the embodiment of the present disclosure, the apparatus further includes:
a caching module, used for caching the obtained data resources. In the embodiment, the obtained data resources are cached to satisfy a request for high concurrent traffic. Wherein, the data resources include the panoramic live broadcast video resources and the panoramic recorded broadcast video resources.

For the apparatus embodiment, it is basically similar to the corresponding method embodiment, thus is described simply, and related parts can see a part of illustration to the method embodiment.

In summary, according to the method and apparatus for processing the panoramic live broadcast video resources provided by the embodiments of the present disclosure, the panoramic live broadcast video resources are processed to directly establish a connection of the wearable virtual reality device and the panoramic live broadcast video resources, so that the user can obtain more real-time live videos, after the live broadcast is terminated, the corresponding panoramic recorded broadcast video resources are further provided, so all-directional full-view dome type viewing experience is brought to the user, the viewed programs are not limited by the geographic position, after logging in the member system, the user can also interact with other simultaneously viewing users, and the user can play the program on demand after collecting the same, so the user experience of the virtual reality is greatly improved.

Fig.4 is a schematic diagram of a solid structure of an apparatus for processing panoramic live broadcast video resources provided by the present disclosure.

Refer to Fig.4, the apparatus for processing panoramic live broadcast video resources provided by the embodiment of the present disclosure includes:
a processor 410, a communication interface 420, a memory 430 and a bus 440; wherein,
the processor 410, the communication interface 420 and the memory 430 communicate with each other by the bus 440;
the communication interface 420 is used for completing the information transmission of the apparatus for processing panoramic live broadcast video resources and a client;
the processor 410 is used for invoking a logic instruction in the memory 430 to execute the following method:
   obtaining the panoramic live broadcast video resources, wherein the panoramic live broadcast video resources are suitable for a wearable virtual reality device; obtaining first detail information of the panoramic live broadcast video resources, and editing the first detail information to obtain first description data for illustrating the panoramic live broadcast video resources; and sending the panoramic live broadcast video resources and the first description data to the client corresponding to the wearable virtual reality device.
   refer to Fig.1, the embodiment of the present disclosure further provides a computer program, including a program code, wherein the program code is used for executing the following operations:
      obtaining the panoramic live broadcast video resources, wherein the panoramic live broadcast video resources are suitable for a wearable virtual reality device;
      obtaining first detail information of the panoramic live broadcast video resources, and editing the first detail information to obtain first description data for illustrating the panoramic live broadcast video resources; and
      sending the panoramic live broadcast video resources and the first description data to a client corresponding to the wearable virtual reality device.

The embodiment of the present disclosure further provides a storage medium, used for storing the above computer program.

Those of ordinary skill in the art can understand that all or a part of the steps in the above method embodiment can be implemented by a program instructing corresponding hardware, the foregoing program can be stored in a computer readable storage medium, and when being executed, the program can execute the steps including the above method embodiment; and the foregoing storage medium includes various media capable of storing program codes, such as a ROM, a RAM, a magnetic disk or an optical disk, etc.

Finally, it should be noted that the above-mentioned embodiments are merely used for illustrating the technical solutions of the present disclosure, rather than limiting them; although the present disclosure has been described in detail with reference to the foregoing embodiments, those of ordinary skill in the art should understand that they could still make modifications to the technical solutions recorded in the foregoing embodiments or make equivalent substitutions to a part of or all technical features therein; and these modifications or substitutions do not make the essence of the corresponding technical solutions depart from the scope of the technical solutions in the embodiments of the present disclosure.

## Claims

1. A method for processing panoramic live broadcast video resources, comprising:
obtaining the panoramic live broadcast video resources, wherein the panoramic live broadcast video resources are suitable for a wearable virtual reality device;
obtaining first detail information of the panoramic live broadcast video resources, and editing the first detail information to obtain first description data for illustrating the panoramic live broadcast video resources; and
sending the panoramic live broadcast video resources and the first description data to a client corresponding to the wearable virtual reality device.

2. The method of claim 1, wherein after the live broadcast of the panoramic live broadcast video resources is terminated, the method further comprises:
obtaining panoramic recorded broadcast video resources corresponding to the panoramic live broadcast video resources, wherein the panoramic recorded broadcast video resources are suitable for the wearable virtual reality device;
obtaining second detail information of the panoramic recorded broadcast video resources, and editing the second detail information to obtain second description data for illustrating the panoramic recorded broadcast video resources; and
sending the panoramic recorded broadcast video resources and the second description data to the client.

3. The method of claim 1 or 2, further comprising:
receiving a user request message sent by the client, wherein the user request message carries a user ID; and
determining the operation authority of the user according to the user ID.

4. The method of claim 3, wherein the sending the panoramic live broadcast video resources and the first description data to the client corresponding to the wearable virtual reality device specifically comprises:
sending the panoramic live broadcast video resources conforming to the operation authority among all the obtained panoramic live broadcast video resources and the corresponding first description data to the client;
and/or,
the sending the panoramic recorded broadcast video resources and the second description data to the client specifically comprises:
sending the panoramic recorded broadcast video resources conforming to the operation authority among all the obtained panoramic recorded broadcast video resources and the corresponding second description data to the client.

5. The method of claim 2, further comprising:
generating comment information related to any panoramic live broadcast video resource and uploaded by the user into shared information;
sending the shared information to the clients of other users who are playing the panoramic live broadcast video resource at present;
or,
generating the comment information related to any panoramic recorded broadcast video resource and uploaded by the user into the shared information; and
sending the shared information to the clients of other users who are playing the panoramic recorded broadcast video resource at present.

6. The method of claim 2, wherein before sending the panoramic live broadcast video resources and the first description data to the client corresponding to the wearable virtual reality device, the method further comprises:
filtering the panoramic live broadcast video resources according to the hardware requirements of an intelligent device to which the client belongs, in order to send the panoramic live broadcast video resources conforming to the hardware requirements among all the panoramic live broadcast video resources and the corresponding first description data to the client;
and/or,
before sending the panoramic recorded broadcast video resources and the second description data to the client, the method further comprises:
filtering the panoramic recorded broadcast video resources according to the hardware requirements of the intelligent device to which the client belongs, in order to send the panoramic recorded broadcast video resources conforming to the hardware requirements among all the panoramic recorded broadcast video resources and the corresponding second description data to the client.

7. The method of claim 2, wherein after obtaining the first detail information of the panoramic live broadcast video resources and editing the first detail information, the method further comprises:
obtaining real-time detail information of the panoramic live broadcast video resources, and editing the real-time detail information to update the first description data for illustrating the panoramic live broadcast video resources;
and/or,
after obtaining the second detail information of the panoramic recorded broadcast video resources and editing the second detail information, the method further comprises:
obtaining real-time detail information of the panoramic recorded broadcast video resources, and editing the real-time detail information to update the second description data for illustrating the panoramic recorded broadcast video resources.

8. The method of claim 2, further comprising:
encrypting the play addresses of the obtained panoramic live broadcast video resources and the panoramic recorded broadcast video resources corresponding to the panoramic live broadcast video resources.

9. An apparatus for processing panoramic live broadcast video resources, comprising:
a first obtaining module, used for obtaining the panoramic live broadcast video resources, wherein the panoramic live broadcast video resources are suitable for a wearable virtual reality device;
a second obtaining module, used for obtaining first detail information of the panoramic live broadcast video resources;
an editing module, used for editing the first detail information to obtain first description data for illustrating the panoramic live broadcast video resources; and
a sending module, used for sending the panoramic live broadcast video resources and the first description data to a client corresponding to the wearable virtual reality device.

10. The apparatus of claim 9, wherein the first obtaining module is further used for, after the live broadcast of the panoramic live broadcast video resources is terminated, obtaining panoramic recorded broadcast video resources corresponding to the panoramic live broadcast video resources, wherein the panoramic recorded broadcast video resources are suitable for the wearable virtual reality device;
the second obtaining module is further used for obtaining second detail information of the panoramic recorded broadcast video resources;
the editing module is further used for editing the second detail information to obtain second description data for illustrating the panoramic recorded broadcast video resources; and
the sending module is further used for sending the panoramic recorded broadcast video resources and the second description data to the client.

11. An apparatus for processing panoramic live broadcast video resources, comprising:
a processor, a memory, a communication interface and a bus; wherein,
the processor, the memory and the communication interface communicate with each other by the bus;
the communication interface is used for completing the information transmission of the apparatus for processing panoramic live broadcast video resources and a client;
the processor is used for invoking a logic instruction in the memory to execute the following method:
obtaining the panoramic live broadcast video resources, wherein the panoramic live broadcast video resources are suitable for a wearable virtual reality device; obtaining first detail information of the panoramic live broadcast video resources, and editing the first detail information to obtain first description data for illustrating the panoramic live broadcast video resources; and sending the panoramic live broadcast video resources and the first description data to the client corresponding to the wearable virtual reality device.

12. A computer program, comprising a program code, wherein the program code is used for executing the following operations:
obtaining the panoramic live broadcast video resources, wherein the panoramic live broadcast video resources are suitable for a wearable virtual reality device;
obtaining first detail information of the panoramic live broadcast video resources, and editing the first detail information to obtain first description data for illustrating the panoramic live broadcast video resources; and
sending the panoramic live broadcast video resources and the first description data to a client corresponding to the wearable virtual reality device.

13. A storage medium, used for storing the computer program of claim 12.
